# EUROPÄISCHE PATENTSCHRIFT

(11) **EP 1 456 122 B1**
(45) Veröffentlichungstag und Bekanntmachung des Hinweises auf die Patenterteilung: **29.06.2005**
(21) Anmeldenummer: 02804899.9
(22) Anmeldetag: 13.12.2002
(51) Int. Cl.: C01B 3/38

(54) **KOHLENWASSERSTOFF-REFORMER**
HYDROCARBON REFORMER
REFORMEUR POUR HYDROCARBURES

(30) Priorität: 18.12.2001 DE 10162202
(43) Veröffentlichungstag der Anmeldung: 15.09.2004
(73) Patentinhaber: FRAUNHOFER-GESELLSCHAFT ZUR FÖRDERUNG DER ANGEWANDTEN FORSCHUNG E.V., 80636 München (DE)
(72) Erfinder: DREHER, Jürgen, 76229 Karlsruhe (DE); KRAUSA, Michael, 76327 Pfinztal (DE); PINKWART, Karsten, 76229 Karlsruhe (DE); SCHWEPPE, Rainer, 76228 Karlsruhe (DE)
(86) Internationale Anmeldenummer: PCT/EP2002/014255
(87) Internationale Veröffentlichungsnummer: WO 2003/051770

(56) Entgegenhaltungen:
- EP-A- 0 742 172
- DE-A- 1 667 573
- GB-A- 2 139 644
- US-A- 4 500 323

## Beschreibung

Die Erfindung betrifft die Verwendung von Wasserstoff aus der Reformierung von unpolaren Kohlenwasserstoffen in überkritischem Wasser in Gegenwart von Katalysatoren, einen Reformer zur Umwandlung von unpolaren Kohlenwasserstoffen in überkritischem Wasser sowie ein entsprechendes Verfahren zur Reformierung von unpolaren Kohlenwasserstoffen in überkritischem Wasser.

Es ist bekannt, aus Wasserstoff und Sauerstoff in Brennstoffzellen elektrische Energie zu erzeugen. Bekannte Brennstoffzellen-Typen sind die alkalische Brennstoffzelle, die Membranbrennstoffzelle, die Direktmethanol-Brennstoffzelle, die phosphorsaure Brennstoffzelle, die Schmelzcarbonat-Brennstoffzelle und die oxidkeramische Brennstoffzelle.

Wasserstoff wird heute hauptsächlich noch aus fossilen Rohstoffquellen wie Erdgas und Erdöl durch Dampfreformierung, partielle Oxidation oder autothermale Reformierung erzeugt. Die für den Betrieb autarker Brennstoffzellen benötigten Wasserstoffmengen sind jedoch um Größenordnungen kleiner als die in industriellen Anlagen der wasserstoffverarbeitenden Industrie erzeugten Wasserstoffmengen. Ein für den Betrieb einer Brennstoffzelle geeigneter Wasserstoffgenerator sollte kompakt und leicht sein.

Aufgabe der Erfindung ist es, ein Verfahren zur Erzeugung von Wasserstoff für den Betrieb einer Brennstoffzelle sowie einen für den Betrieb einer Brennstoffzelle geeigneten kompakten Wasserstoffgenerator bereitzustellen.

Aufgabe der Erfindung ist es, ein Verfahren zur Erzeugung von Wasserstoff für den Betrieb einer Brennstoffzelle sowie einen für den Betrieb einer Brennstoffzelle geeigneten kompakten Wasserstoffgenerator bereitzustellen. Gelöst wird die Aufgabe durch ein Verfahren zur Reformierung von unpolaren Kohlenwasserstoffen in überkritischem Wasser mit den Schritten
a) Einspeisung von Wasser in eine Kompressionszone und Kompression auf einen Druck p1;
b) Einspeisung des komprimierten Wassers in eine Aufheizzone und Aufheizen auf eine Temperatur T1, wobei das Wasser bei dem Druck p1 und der Temperatur T1 im überkritischen Zustand vorliegt;
c) Kompression der Kohlenwasserstoffe auf den Druck p1 und Einspeisung in das überkritische Wasser, wobei ein überkritisches Wasser/Kohlenwasserstoff-Gemisch erhalten wird;
d) Reagieren lassen des überkritischen Wasser/Kohlenwasserstoff-Gemischs in einer Reaktions zone unter überkritischen Bedingungen in Gegenwart eines Katalysators der ein Katalytisch aktives Metall, ausgewählt aus Nickel, Platin, Cer, Gadolinium, Rhodium und Zirkonium enthält, wobei die Kohlenwasserstoffe zumindest teilweise mit Wasser zu Kohlenmonoxid, Kohlendioxid und Wasserstoff reagieren;
e) Abkühlen des in Schritt d) erhaltenen Produktgemischs auf eine Temperatur T2 und Entspannen auf einen Druck p2, wobei das Produktgasgemisch bei der Temperatur T2 und dem Druck p2 in unterkritischem Zustand vorliegt;
f) Abtrennung der Gasphase von der flüssigen wässrigen Phase;
g) zumindest teilweise Rückführung der wässrigen Phase in die Kompressionszone,
wobei die Schritte a) bis g) kontinuierlich durchgeführt werden.

Gelöst wird die Aufgabe ferner durch eine Vorrichtung zur Durchführung dieses Verfahrens, umfassend
a) Hochdruckpumpe zum Fördern von Wasser;
b) beheizbaren Reaktor zum Aufheizen des Wassers;
c) Hochdruckpumpe zum Fördern des Kohlenwasserstoffs;
d) Einrichtung zum Einspeisen des Kohlenwasserstoffs in das überkritische Wasser;
e) beheizbarer Reaktor zum Reagieren lassen des überkritischen Kohlenwasserstoff/Wasser-Gemischs, welcher eine Schüttung aus Katalysatorteilchen oder mit katalytisch aktivem Material beschichtete Einbauten enthält;
f) Einrichtung zum Kühlen des Produktgemischs;
g) Entspannungsventil zur Entspannung des Produktgemischs;
h) Phasenseparator zur Abtrennung der flüssigen wässrigen Phase von der Gasphase;
i) Einrichtung zur Rückführung der flüssigen wässrigen Phase,
sowie Zu-, Ableitungen und Verbindungsleitungen zwischen den Teilen a) bis i) der Vorrichtung.

Der Druck p1, bei dem die überkritische Kohlenwasserstoff Reformierung durchgeführt wird, beträgt üblicherweise von 250 bis 350 bar. Die Temperatur T1, bei der die überkritische Kohlenwasserstoff-Reformierung durchgeführt wird, beträgt üblicherweise von 500 bis 600 °C. Wasser und unpolarer Kohlenwasserstoff liegen üblicherweise im Massenverhältnis von 99 : 1 bis 60 : 40 vor.

Vorzugsweise werden sowohl für das Aufheizen des Wassers als auch für die überkritische Kohlenwasserstoff-Reformierung Reaktoren mit einem großen Oberfläche : Volumen-Verhältnis, beispielsweise Rohrreaktoren eingesetzt. Eine große Oberfläche kann auch durch Einbauten in dem Reaktor erzielt werden.

Die Kohlenwasserstoff-Reformierung wird in Gegenwart eines Katalysators durchgeführt. Dieser liegt als Heterogenkatalysator vor. Der Heterogenkatalysator kann als Schüttung aus Katalysatorteilchen oder in Form von mit katalytisch aktivem Material beschichteter Einbauten vorliegen. Als katalytisch aktives Material sind insbesondere Nickel, Platin, Cer, Gadolinium, Rhodium und Zirkonium als katalytisch aktive Metalle geeignet. Als katalytisch aktives Material sind außerdem insbesondere K₂O, MgO, Cr₂O₃, Fe₂O₃, CuO, NiO, ZnO, SiO₂ als katalytisch aktive Metalloxide geeignet. Diese liegen üblicherweise auf einem oxidischen oder metallischen Träger vor. Beispiele für oxidische Träger sind Al₂O₃ oder Calciumaluminat. Die katalytisch aktiven Metalle oder Metalloxide können in Form von beschichteten Einbauten, beispielsweise in Form beschichteter Metalldrähte oder in Form von Schäumen in der Reaktionszone vorliegen. Die katalytisch aktiven Metalle oder Metalloxide können auch in Form von Katalysatorteilchen, beispielsweise Katalysatorformkörper wie Ringe, Stränge oder Hohlzylinder, oder auch als Katalysatorsplitt vorliegen.

Die Kohlenwasserstoff Reformierung kann auch in Gegenwart von Wasserstoffperoxid durchgeführt werden, das als verdünnte wässrige Lösung in den beheizbaren Rohrreaktor eingespeist werden kann.

Geeignete unpolare Kohlenwasserstoffe sind aliphatische, cycloaliphatische und aromatische Kohlenwasserstoffe oder deren Gemische. Bevorzugt sind Kohlenwasserstoff-Kraftstoffe, beispielsweise Mineralöl, Dieselöl, Benzin, Bio-Diesel und Pflanzenöle.

Ein bevorzugter Kohlenwasserstoffkraftstoff, der in dem erfindungsgemäßen Verfahren eingesetzt wird, ist Dieselkraftstoff.

Es wird ein Gasgemisch erhalten, das neben Wasserstoff noch Kohlenwasserstoffe, CO und CO₂ enthält. Kohlenmonoxid ist ein Katalysatorgift für in verschiedenen Brennstoffzellentypen, beispielsweise in PEM-Brennstoffzellen, eingesetzte katalytisch aktive Materialien. Vorzugsweise wird daher in einem nachgelagerten chemischen oder physikalischen Prozess der CO-Gehalt des aus der Kohlenwasserstoff-Reformierung erhaltenen Gasgemischs auf wenige ppm reduziert. Dies kann in einem sogenannten Shift-Reaktor erfolgen, in dem CO und Wasserdampf in Gegenwart eines Katalysators zu CO₂ und Wasserstoff reagiert. CO kann auch unter Zugabe von Sauerstoff zu CO₂ konvertiert werden (CO-Konvertierung). Schließlich kann der Wasserstoff durch Abtrennung über eine Membran, die nur für Wasserstoff durchlässig ist, beispielsweise eine Pd/Ag-Membran, von störenden Fremdgasen befreit werden.

Im Folgenden wird die Erfindung mit Bezugnahme auf die Zeichnung näher erläutert.

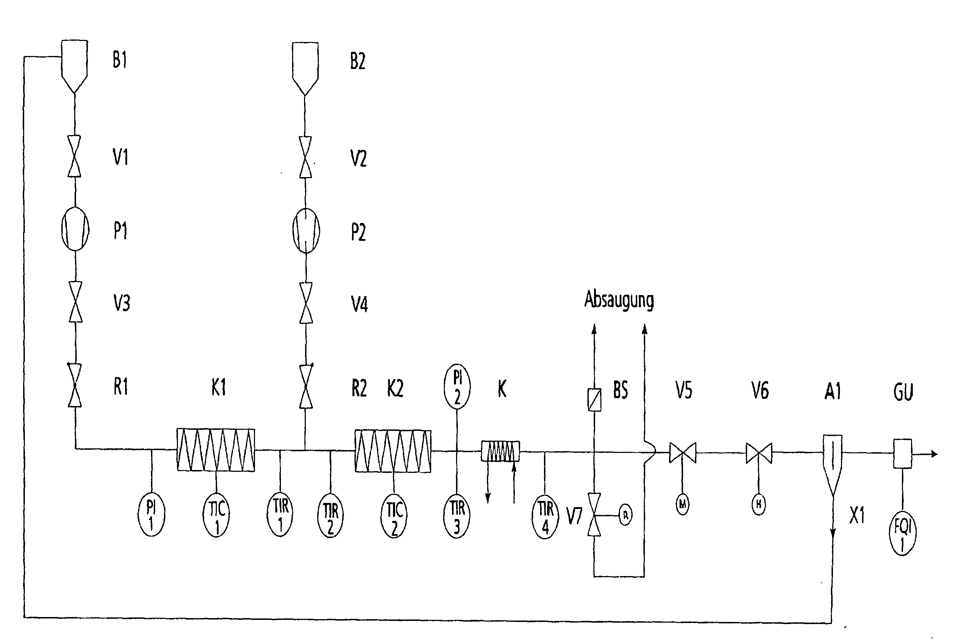

Figur 1 zeigt eine Vorrichtung zur Reformierung von Kohlenwasserstoffen in überkritischem Wasser gemäß einer Ausführungsform der Erfindung.
Wasser wird einem Vorratstank B1 entnommen und mittels einer durchflussgeregelten HPLC-Pumpe P1 gegen den Systemdruck in einen ersten Rohrreaktor K1, der als Kapillarrohrreaktor ausgebildet ist, gefördert. Dem Wasser kann Wasserstoffperoxid, beispielsweise in Mengen von 0,1 bis 4,0 Gew.%, zugemischt sein. Die Durchflussregelung der HPLC-Pumpe erlaubt die Einstellung der Verweilzeit. In dem ersten Kapillarrohrreaktor wird Wasser auf eine Temperatur aufgeheizt, bei der Wasser unter dem Systemdruck im überkritischen Zustand vorliegt. Über eine zweite durchflussgeregelte HPLC-Pumpe P2 wird ein unpolares Kohlenwasserstoffgemisch, vorzugsweise ein Dieselkraftstoff-Kohlenwasserstoffgemisch, in den überkritischen Wasserstrom eingespeist. Die Einspeiung kann mittels eines einfachen T-Stücks oder einer Düse erfolgen. Das so erhaltene überkritische Kohlenwasserstoff/Wasser-Gemisch wird in einen zweiten Rohrreaktor K2 gefördert, in dem der Kohlenwasserstoff mit Wasser zu Wasserstoff, Kohlenmonoxid und Kohlendioxid reagiert: Der erste Rohrreaktor K1, der als Kapillarrohrreaktor ausgebildet ist, wird vorzugsweise in einer Nut spiralförmig um einen Hohlzylinder aus einem gut wärmeleitenden Material, vorzugsweise Kupfer, geführt. Der Hohlzylinder ist mittels einer in diesen eingelassenen Heizpatrone elektrisch beheizbar. Um Wärmeverluste und Temperaturgradienten zu verringern, sind die Hohlzylinder mit den Kapillarreaktoren vorzugsweise in ein wärmedämmendes Material eingehüllt. Der zweite Rohrreaktor ist beispielsweise ein Hohlzylinder aus Inconel 625 mit einem Innendurchmesser von 15 mm, der die Katalysatorschüttung aufnimmt. Als Katalysator wird beispielsweise NiO auf Al₂O₃ oder Calciumaluminat als Träger eingesetzt. Dieser liegt beispielsweise in Form einer Schüttung aus Hohlzylindern, Ringen oder Kugeln mit geeigneten Abmessungen vor. Der Rohrreaktor K2 wird vorzugsweise durch einen in einer Nut spiralförmig um den Rohrreaktor geführten Widerstandsheizdraht beheizt. Die Länge des Kapillarreaktors K1 beträgt beispielsweise ca. 1 m, sein Innendurchmesser ca. 1 mm. Die Länge des Rohrreaktors K2 beträgt beispielsweise 10 cm, sein Innendurchmesser ca. 15 mm. Nach Durchgang durch den Rohrreaktor K2 wird das Produktgemisch in dem Kühler K auf eine Temperatur abgekühlt, bei der das Produktgemisch im unterkritischen Zustand vorliegt. Die Kühlung kann beispielsweise in einer wasserumspülten Rohrschleife von beispielsweise 1 m Länge erfolgen. Das Produktgemisch wird nachfolgend durch ein Ventil entspannt und in den Abscheider Al eingeleitet, in dem bei Raumtemperatur die Trennung in eine flüssige wässrige Phase und eine Gasphase erfolgt. Die flüssige wässrige Phase wird rezykliert. Die Gasphase kann nachfolgend in einem Gaschromatographen, Massenspektrometer oder GC/MS analysiert werden.

### Beispiel

Als Modellsubstanz für den nahezu schwefelfreien Diesel der Firma Greenenergy wurden n-Dekan als gesättigter aliphatischer unpolarer Kohlenwasserstoff und o-Xylol als aromatischer Kohlenwasserstoff eingesetzt.

Alle Versuche wurden in der in der Zeichnung dargestellten Versuchsapparatur durchgerührt. Als Heterogenkatalysator wurde NiO auf Al₂O₃ und Calciumaluminat als Träger in Form einer Schüttung aus Hohlzylindern mit den Abmessungen 9 x 10 x 3 mm (Durchmesser x Länge x Innendurchmesser) eingesetzt.

Die Umsetzung von n-Dekan mit überkritischem Wasser wurde unter Verwendung eines Rohrreaktors aus V4A-Stahl mit einem Innendurchmesser von 15 mm und einer Länge von 10 cm durchgeführt. Das Mischungsverhältnis betrug 97,5 Vol.-% Wasser und 2,5 Vol.-% n-Dekan, der Druck betrug 250 bar, die Temperatur 550°C und die Verweilzeit 5 s. Es wurde eine Wasserstoff-Ausbeute von 50,2 Vol.-%, bezogen auf die abgetrennte Gasphase, erzielt.

Bei der Umsetzung von o-Xylol mit überkritischem Wasser in dem gleichen Rohrreaktor wurde bei einem Mischungsverhältnis von 97,5 Vol.-% Wasser und 2,5 Vol.-% o-Xylol, einem Druck von 250 bar, einer Temperatur von 550 °C und einer Verweilzeit von 5 s eine Wasserstoff-Ausbeute von 70 Vol.-%, bezogen auf die abgetrennte Gasphase, erzielt.

Bei Drücken von 250 bis 350 bar wurde eine unveränderte Wasserstoffausbeute erzielt.

### Bezugszeichenliste

- A1: Abscheider
- B1: Vorratsbehälter für Wasser
- B2: Vorratsbehälter für Kohlenwasserstoff
- BS: Berstscheibenhalterung
- GU: Gasuhr
- K: Kühlung
- K1: Kapillarreaktor
- K2: Rohrreaktor
- P1: HPLC-Pumpe
- P2: HPLC-Pumpe
- R1: Rückschlagarmatur
- R2: Rückschlagarmatur
- V1: Absperrhahn
- V2: Absperrhahn
- V3: Absperrhahn
- V4: Absperrhahn
- V5: Vordruckregler
- V6: Überströmventil
- V7: Hochdruckventil
- X1: wässrige Phase
- FQII: Durchflussmesser
- PI1: Drucksensor
- PI2: Drucksensor
- TIC1: Temperaturfühler
- TIC2: Temperaturfühler
- TIRI: Temperaturregler
- TIR2: Temperaturregler
- TIR3: Temperaturregler
- TIR4: Temperaturregler

## Patentansprüche

1. Verfahren zur Reformierung von unpolaren Kohlenwasserstoffen in überkritischem Wasser mit den Schritten
a) Einspeisung von Wasser in eine Kompressionszone und Kompression auf einen Druck p1;
b) Einspeisung des komprimierten Wassers in eine Aufheizzone und Aufheizen auf eine Temperatur T1, wobei das Wasser bei dem Druck p1 und der Temperatur T1 im überkritischen Zustand vorliegt;
c) Kompression der Kohlenwasserstoffe auf den Druck p1 und Einspeisung in das überkritische Wasser, wobei ein überkritisches Wasser/Kohlenwasserstoff-Gemisch erhalten wird;
d) Reagieren lassen des überkritischen Wasser/Kohlenwasserstoff-Gemischs in einer Reaktionszone unter überkritischen Bedingungen in Gegenwart eines Katalysators, der ein katalytisch aktives Metall, ausgewählt aus Nickel, Platin, Cer, Gadolinium, Rhodium und Zirkonium enthält, wobei die Kohlenwasserstoffe zumindest teilweise mit Wasser zu Kohlenmonoxid, Kohlendioxid und Wasserstoff reagieren;
e) Abkühlen des in Schritt d) erhaltenen Produktgemischs auf eine Temperatur T2 und Entspannen auf einen Druck p2, wobei das Produktgasgemisch bei der Temperatur T2 und dem Druck p2 in unterkritischem Zustand vorliegt;
f) Abtrennung der Gasphase von der flüssigen wässrigen Phase;
h) zumindest teilweise Rückführung der wässrigen Phase in die Kompressionszone,
wobei die Schritte a) bis g) kontinuierlich durchgeführt werden.

2. Verfahren nach Anspruch 1, **dadurch gekennzeichnet, dass** der unpolare Kohlenwasserstoff ein Kohlenwasserstoff-Kraftstoff ist.

3. Verfahren nach Anspruch 1 oder 2, **dadurch gekennzeichnet, dass** der Katalysator katalytisch aktive Oxide, ausgewählt aus der Gruppe bestehend aus K₂O, MgO, Cr₂O₃, Fe₂O₃, CuO, NiO, ZnO, SiO₂ und deren Gemischen, enthält.

4. Verfahren nach einem der Ansprüche 1 bis 3, **dadurch gekennzeichnet, dass** der Katalysator als Schüttung aus Katalysatorteilchen in der Reaktionszone vorliegt.

5. Verfahren nach einem der Ansprüche 1 bis 3, **dadurch gekennzeichnet, dass** der Katalysator in Form von mit katalytisch aktivem Material beschichteten Einbauten in der Reaktionszone vorliegt.

6. Verfahren nach einem der Ansprüche 1 bis 5, **dadurch gekennzeichnet, dass** Schritt d) in Gegenwart von Wasserstoffperoxid durchgeführt wird.

7. Vorrichtung zur Durchführung des Verfahrens nach einem der Ansprüche 1 bis 6, umfassend
a) Hochdruckpumpe zum Fördern von Wasser;
b) beheizbaren Reaktor zum Aufheizen des Wassers;
c) Hochdruckpumpe zum Fördern des Kohlenwasserstoffs;
d) Einrichtung zum Einspeisen des Kohlenwasserstoffs in das überkritische Wasser;
e) beheizbarer Reaktor zum Reagierenlassen des überkritischen Kohlenwasserstoff/Wasser-Gemischs, welcher eine Schüttung aus Katalysatorteilchen oder mit katalytisch aktivem Material beschichtete Einbauten enthält;
f) Einrichtung zum Kühlen des Produktgemischs;
g) Entspannungsventil zur Entspannung des Produktgemischs;
h) Phasenseparator zur Abtrennung der flüssigen wässrigen Phase von der Gasphase;
i) Einrichtung zur Rückführung der flüssigen wässrigen,
sowie Zu-, Ableitungen und Verbindungsleitungen zwischen den Teilen a) bis i) der Vorrichtung.

8. Vorrichtung nach Anspruch 7, **dadurch gekennzeichnet, dass** die Reaktoren b) und e) Rohrreaktoren sind.

## Claims

1. Method for the reforming of nonpolar hydrocarbons in supercritical water, with the steps
a) feeding of water into a compression zone and compression to a pressure p1;
b) feeding of the compressed water into a heating zone and heating to a temperature T1, the water being present at the pressure p1 and the temperature T1 in the supercritical state;
c) compression of the hydrocarbons to the pressure p1 and feeding into the supercritical water, a supercritical water/hydrocarbon mixture being obtained;
d) leaving the supercritical water/hydrocarbon mixture to react in a reaction zone under supercritical conditions in the presence of a catalyst which contains a catalytically active metal, selected from nickel, platinum, cerium, gadolinium, rhodium and zirconium, the hydrocarbons reacting at least partially with water to form carbon monoxide, carbon dioxide and hydrogen;
e) cooling of the product mixture obtained in step d) to a temperature T2 and pressure reduction to a pressure p2, the product gas mixture being present at the temperature T2 and the pressure p2 in the subcritical state;
f) separation of the gas phase from the liquid aqueous phase;
g) at least partially recirculating the aqueous phase into the compression zone, the steps a) to g) being implemented continuously.

2. Method according to claim 1, **characterised in that** the nonpolar hydrocarbon is a hydrocarbon fuel.

3. Method according to claim 1 or 2, **characterised in that** the catalyst contains catalytically active oxides, selected from the group comprising K₂O, MgO, Cr₂O₃, Fe₂O₃, CuO, NiO, ZnO, SiO₂ and mixtures thereof.

4. Method according to one of the claims 1 to 3, **characterised in that** the catalyst is present in the reaction zone as a bed comprising catalyst particles.

5. Method according to one of the claims 1 to 3, **characterised in that** the catalyst is present in the reaction zone in the form of inserts coated with catalytically active material.

6. Method according to one of the claims 1 to 5, **characterised in that** step d) is implemented in the presence of hydrogen peroxide.

7. Device for implementing the method according to one of the claims 1 to 6, comprising
a) high pressure pump for conveying water;
b) heatable reactor for heating the water;
c) high pressure pump for conveying the hydrocarbon;
d) mechanism for feeding the hydrocarbon into the supercritical water;
e) heatable reactor for reaction of the supercritical hydrocarbon/water mixture which contains a bed comprising catalyst particles or inserts coated with catalytically active material;
f) mechanism for cooling the product mixture;
g) pressure reduction valve for reducing the pressure of the product mixture;
h) phase separator for separating the liquid aqueous phase from the gas phase;
i) mechanism for recirculating the liquid aqueous phase,
and also inlet pipes, outlet pipes and connection pipes between the parts a) to i) of the device.

8. Device according to claim 7, **characterised in that** the reactors b) and e) are tubular reactors.

## Revendications

1. Procédé de réformage d'hydrocarbures non polaires dans de l'eau hypercritique comportant les étapes suivantes :
(a) introduction d'eau dans une zone de compression et compression à une pression p1 ;
(b) introduction de l'eau comprimée dans une zone de chauffage et chauffage à une température T1, l'eau étant présente à la pression p1 et à la température T1 à la température hypercritique ;
(c) compression des hydrocarbures à la pression p1 et introduction dans l'eau hypercritique, avec obtention d'un mélange d'eau et d'hydrocarbure hypercritique ;
(d) réaction du mélange hypercritique d'eau et d'hydrocarbures dans une zone de réaction dans des conditions hypercritiques en présence d'un catalyseur, qui contient un métal catalytiquement actif choisi parmi le nickel, le platine, le cérium, le gadolinium, le rhodium et le zirconium, les hydrocarbures réagissant au moins en partie avec de l'eau pour donner du monoxyde de carbone, du dioxyde de carbone et de l'hydrogène,
(e) refroidissement du mélange de produits obtenu dans l'étape d) à une température T2 et détente à une pression p2, le mélange de gaz produit étant présent à la température T2 et à la pression p2 à l'état hypocritique ;
(f) séparation de la phase gazeuse d'avec la phase aqueuse liquide ;
(g) réintroduction au moins partielle de la phase aqueuse dans la zone de compression,
les étapes a) à g) étant réalisées de façon continue.

2. Procédé selon la revendication 1,
**caractérisé en ce que**
l'hydrocarbure non polaire est un carburant hydrocarboné.

3. Procédé selon les revendications 1 ou 2,
**caractérisé en ce que**
le catalyseur contient des oxydes catalytiquement actifs choisis dans le groupe constitué par K₂O, MgO, Cr₂O₃, Fe₂O₃, CuO, NiO, NzO, SiO₂ et leurs mélanges.

4. Procédé selon l'une des revendications 1 à 3,
**caractérisé en ce que**
le catalyseur se présente sous forme de vrac de particules de catalyseurs dans la zone de réaction.

5. Procédé selon l'une des revendications 1 à 3,
**caractérisé en ce que**
le catalyseur se présente dans la zone d'insertion sous forme d'insertions revêtues d'un matériau catalytiquement actif.

6. Procédé selon l'une des revendications 1 à 5,
**caractérisé en ce que**
l'étape d) est conduite en présence de peroxyde d'hydrogène.

7. Dispositif pour la réalisation du procédé selon l'une des revendications 1 à 6,
comprenant
(a) une pompe haute pression pour faire circuler l'eau ;
(b) un réacteur pouvant être chauffé pour chauffer l'eau,
(c) une pompe haute pression pour faire circuler l'hydrocarbure ;
(d) un dispositif pour l'introduction de l'hydrocarbure dans l'eau hypercritique ;
(e) un réacteur pouvant être chauffé pour faire réagir le mélange hypercritique d'hydrocarbure et d'eau, qui contient un vrac de particules de catalyseurs, ou avec des insertions revêtues d'un matériau catalytiquement actif ;
(f) un dispositif de refroidissement du mélange produit ;
(g) une soupape de détente pour détendre le mélange de produit ;
(h) un séparateur de phase pour séparer la phase aqueuse liquide de la phase gazeuse ;
(i) un dispositif de réintroduction de la phase aqueuse liquide, ainsi que des canalisations d'apport, de dérivation et de liaison entre les parties a) à i) du dispositif.

8. Dispositif selon la revendication 7,
**caractérisé en ce que**
les réacteurs b) et e) sont des réacteurs tubulaires.
